# EUROPÄISCHE PATENTSCHRIFT

(11) **EP 0 841 220 B1**
(45) Veröffentlichungstag und Bekanntmachung des Hinweises auf die Patenterteilung: **25.07.2001**
(21) Anmeldenummer: 97117729.0
(22) Anmeldetag: 14.10.1997
(51) Int. Cl.: B60R 21/02

(54) **Sitzeinrichtung**
Seat assembly
Ensemble de siège

(30) Priorität: 07.11.1996 DE 19645779
(43) Veröffentlichungstag der Anmeldung: 13.05.1998
(73) Patentinhaber: SAME DEUTZ-FAHR S.P.A., 24047 Treviglio (Bergamo) (IT)
(72) Erfinder: von Allwörden, Wilhelm, 89168 Oberstotzingen (DE)
(74) Vertreter: Quinterno, Giuseppe

(56) Entgegenhaltungen:
- US-A- 5 454 596

## Beschreibung

Die Erfindung betrifft eine Sitzeinrichtung mit Sicherheitsvorrichtung für land- und bauwirtschaftliche Arbeitsmaschinen, insbesondere nach dem Oberbegriff des Anspruchs 1.

Bei Ackerschleppern war früher ein Beifahrersitz seitlich auf dem hinteren Kotflügel und quer zur Fahrtrichtung positioniert, wobei ein Haltebügel das Becken des Beifahrers gegen Verrutschen nach vorne sicherte. Bei neuen Ackerschleppern mit integrierter Fahrerkabine ist der Beifahrersitz nach vorne versetzt neben dem Fahrersitz ebenfalls auf dem hinteren Kotflügel befestigt, jedoch in Fahrtrichtung angeordnet. Um ein bequemes Ein- und Aussteigen zu gewährleisten, besitzt dieser Beifahrersitz keine Armlehnen.

Bei heftigem Bremsen oder starken Bewegungen des Schleppers kann sich der Fahrer des Schleppers am Lenkrad abstützen, während der Beifahrer, vor allen Dingen, wenn es sich um Kinder handelt, Gefahr läuft, von einem derartigen Beifahrersitz zu fallen oder gegen die Frontscheibe geschleudert zu werden.

Aus der gathungsbildeuden US-A-5,454,596 ist eine Rückhalteeinrichtung bekannt, bei der ein Bügelsystem von einer Fahrzeugwand in Richtung auf den Fahrgast abgeklappt wird. In manchen Fahrsituationen bietet das System jedoch keinen optimalen Halt.

Es ist deshalb Aufgabe der Erfindung, eine Sitzeinrichtung für land-und bauwirtschaftliche Fahrzeuge zu schaffen, die auch dem Beifahrer in allen Fahrsituationen den erforderlichen Halt gewährt.

Die Aufgabe wird durch eine Sitzeinrichtung gelöst, die die Merkmale des Anspruchs 1 aufweist.

Auf diese Weise finden der Fahrer und vor allem der Beifahrer Stütze und Halt im Fahrzeug. Dies gilt vor allem, wenn ein Kind den Zusatzsitz benutzt, das bei entsprechenden Fahrzeugbewegungen vom Sitz stürzen oder sogar gegen die Frontscheibe geschleudert werden kann. Durch Entfernen des Bügels ist ein bequemes Ein- und Aussteigen von Fahrer und Beifahrer gewährleistet. Der Bügel ist ohne weiteres in der Lage, die auftretenden Kräfte aufzunehmen. Der Bügel benötigt in seiner Ruhestellung ein Minimum an Platz und steht beim Ein- und Aussteigen nicht im Wege.

Wenn der Bügel schwenkbar angeordnet ist, kann er ohne Schwierigkeiten von der Ruhe- in die Sicherungsstellung gebracht werden. Auf diese Weise wird seine Benutzung gefördert und die angestrebte Sicherheit auch wahrgenommen.

Es ist von Vorteil, wenn der Zusatzsitz im Bereich des hinteren Kotflügels des Ackerschleppers angeordnet ist.

Wenn am hinteren Kotflügel eine elastische Anlage für den abgeklappten Bügel vorgesehen ist, wird ein Klappern des Bügels in dessen Ruhestellung vermieden.

Dieses Klappern wird zusätzlich unterdrückt, wenn der abgeklappte Bügel Druckkontakt mit der elastischen Anlage aufweist. Die gewünschte Vorspannung kann z.B. durch eine Feder-Kugel-Raste, eine Feder-Kniehebel-Konstruktion oder einen Spannbügel erreicht werden.

Ein Bügel mit gepolsterten Bereichen und/oder Griffstücken bietet erhöhten Bedienungskomfort und verbesserte Sicherheit, da die Flächenpressung zwischen Körper und Bügel verringert wird.

Ein Bügel, der aus elastischem Material hergestellt ist, dient ebenfalls der Dämpfung von Stößen und damit der Sicherheit des Beifahrers.

Daß der Bügel mittels einer Halterung am Zusatzsitz oder am hinteren Kotflügel befestigt ist und daß in der Halterung eine Arrettiervorrichtung für die Sicherungsstellung und eine Spannvorrichtung für die Ruhestellung integriert sind, bietet den Vorteil, daß alle die Lagefixierung des Bügels betreffenden Bauteile in einem Aggregat zusammengefaßt sind. Für unterschiedliche Größen des Beifahrers sind verschiedene Raststellungen des Bügels vorgesehen.

Diese werden wie bei Fußrasten von Eisenbahnsitzen in einer Endstellung des Bügels entriegelt und von dort stufenweise eingestellt.

Die Befestigung des Bügels am Beifahrersitz hat Montagevorteile, während die direkte Befestigung am hinteren Kotflügel Festigkeitsvorteile aufweist.

Weitere Merkmale der Erfindung ergeben sich aus der nachfolgenden Beschreibung und der Zeichnung, in der ein ausgeführtes Beispiel der Erfindung schematisch dargestellt ist. Es zeigen:
- Figur 1: Zusatzsitz mit Bügel in Sicherungsstellung;
- Figur 2: Zusatzsitz mit Bügel in Ruhestellung.

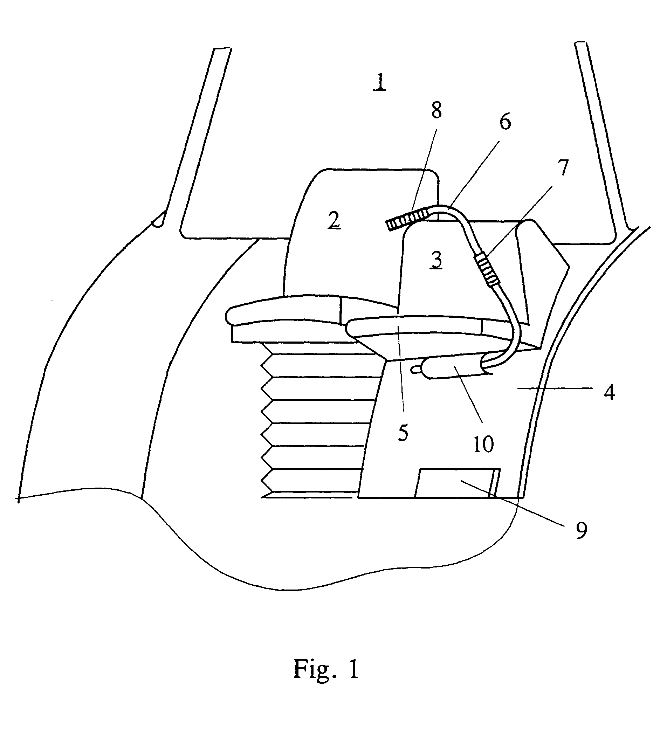

Figur 1 zeigt einen Teil der Kabine (1) eines Ackerschleppers, mit einem Fahrersitz (2) und einem Zusatzsitz (3). Der Zusatzsitz (3) ist neben dem Fahrersitz (2) und in Fahrtrichtung angeordnet. Er befindet sich auf einem Kotflügel (4) eines Hinterrades des Ackerschleppers. Unterhalb der Sitzfläche (5) des Zusatzsitzes (3) ist ein Bügel (6) am Kotflügel (4) mittels einer Halterung (10) drehbar befestigt. Der Bügel (6) trägt ein Griffstück (7) und einen gepolsterten Bereich (8) zur besseren und bequemeren Handhabung.

In Figur 1 ist der Bügel (6) in Sicherungsstellung arretiert dargestellt. So verhindert er bei starkem Bremsen oder bei heftigen Bewegungen des Ackerschleppers ein Herausfallen des Beifahrers, insbesondere von Kindern, aus dem Zusatzsitz (3). Die Arretierung ist in der Halterung (10) integriert.

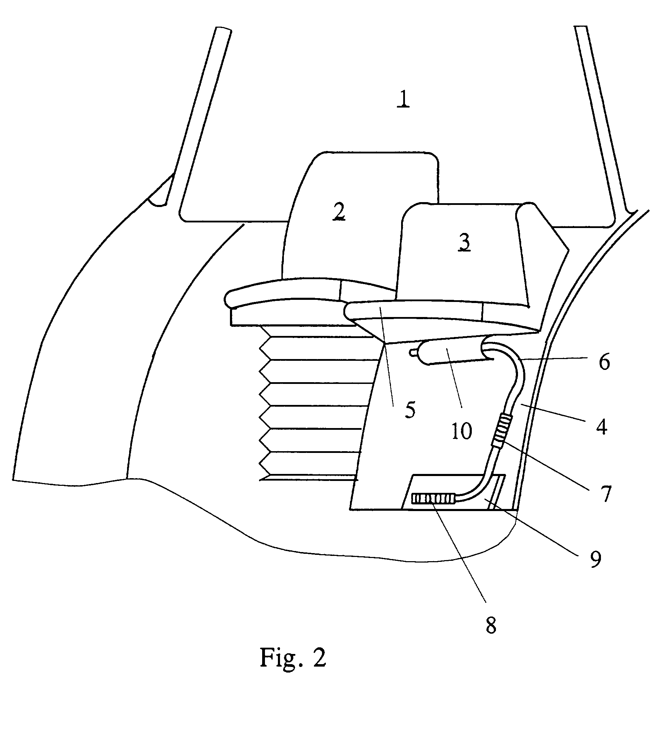

In Figur 2 ist der Bügel (6) in Ruhestellung abgeklappt dargestellt. Er paßt sich der Kontur des Kotflügels (4) an, wodurch er geringstmöglichen Platzbedarf aufweist und beim Einund Aussteigen nicht stört. Er liegt mit Druck an einer elastischen Anlage (9) an, wodurch unkontrollierte Bewegungen und Geräusche bei Fahrten ohne Beifahrer vermieden werden. Eine Spannvorrichtung für die Druckvorspannung in Ruhestellung ist ebenfalls in der Halterung (10) integriert.

Die erfindungsgemäße Sicherheitsvorrichtung ist einfach zu handhaben und schützt den Beifahrer, besonders Kinder, ohne den Fahrer zu behindern.

## Patentansprüche

1. Sitzeinrichtung mit Sicherheitsvorrichtung für land- und bauwirtschaftliche Arbeitsmaschinen, mit einem Fahrersitz und mindestens einem in Fahrtrichtung angeordneten Zusatzsitz, wobei die Sicherheitsvorrichtung einen Bügel (6) aufweist, der im Bereich des Körpers des Sitzbenutzers entfernbar angeordnet ist, und die Sicherheitsvorrichtung beim Fahrersitz (2) und/oder beim Zusatzsitz (3) vorgesehen ist, dadurch gekennzeichnet, daß der Bügel (6) um eine unterhalb der Sitzfläche (5) des Zusatzsitzes (3) angeordnete, horizontale Achse schwenkbar und in Sicherungsstellung arretierbar ist und daß der Bügel (6) in Ruhestellung unterhalb des Zusatzsitzes (3) angeordnet und der Kontur des hinteren Kotflügels (4) angepaßt ist.

2. Sitzeinrichtung nach Anspruch, 1 dadurch gekennzeichnet, daß am hinteren Kotflügel (4) eine elastische Anlage (9) für den abgeklappten Bügel (6) vorgesehen ist.

3. Sitzeinrichtung nach einem der vorangegangenen Ansprüche, dadurch gekennzeichnet, daß der abgeklappte Bügel (6) Druckkontakt mit der elastischen Anlage (9) aufweist.

4. Sitzeinrichtung nach einem der vorangegangenen Ansprüche, dadurch gekennzeichnet, daß der Bügel (6) gepolsterte Bereiche (8) und/oder Griffstücke (7) aufweist.

5. Sitzeinrichtung nach einem der vorangegangenen Ansprüche, dadurch gekennzeichnet, daß der Bügel (6) aus elastischem Material hergestellt ist.

6. Sitzeinrichtung nach einem der vorangegangenen Ansprüche, dadurch gekennzeichnet, daß der Bügel (6) mittels einer Halterung (10) am Zusatzsitz (3) oder am hinteren Kotflügel (4) befestigt ist und daß in der Halterung (10) eine Arretiervorrichtung für die Sicherungsstellung und eine Spannvorrichtung für die Ruhestellung integriert sind.

## Claims

1. A seat assembly with a safety device for agricultural and construction machines, with a driver's seat and at least one additional seat disposed in the direction of travel, wherein the safety device comprises a bar (6), which is removably disposed in the region of the body of the seat user, and the safety device is provided for the driver's seat (2) and/or for the additional seat (3),
characterised in that the bar (6) can swivel around a horizontal axis disposed beneath the seating area (5) of the additional seat (3) and can be arrested in the safety position
and in that the bar (6) is disposed beneath the additional seat (3) in the inoperative position and is adapted to the contour of the rear mudguard (4).

2. A seat assembly according to Claim 1,
characterised in that an elastic bearing surface (9) for the folded-down bar (6) is provided on the rear mudguard (4).

3. A seat assembly according to one of the preceding Claims,
characterised in that the folded-down bar (6) has pressure contact with the elastic bearing surface (9).

4. A seat assembly according to one of the preceding Claims,
characterised in that the bar (6) has padded regions (8) and/or grips (7).

5. A seat assembly according to one of the preceding Claims,
characterised in that the bar (6) is produced from elastic material.

6. A seat assembly according to one of the preceding Claims, characterised in that- the bar (6) is fastened by means of a mounting device (10) to the additional seat (3) or to the rear mudguard (4)
and in that an arresting device for the safety position and
a tensioning device for the inoperative position are integrated in the mounting device (10).

## Revendications

1. Ensemble de siège avec dispositif de sécurité pour machines de travail dans le secteur agricole et l'industrie du bâtiment, comprenant un siège de chauffeur et au moins un siège d'appoint agencé dans la direction de conduite, dans lequel le dispositif de sécurité présente un étrier (6) qui est agencé dans la zone du corps de l'utilisateur de manière à pouvoir l'en enlever, et le dispositif de sécurité est ménagé sur le siège de chauffeur (2) et/ou sur le siège d'appoint (3), caractérisé en ce que l'étrier (6) est agencé à pivotement autour d'un axe horizontal agencé en dessous de la surface d'assise (5) du siège d'appoint (3) et peut être bloqué en position de sécurité, et en ce que l'étrier (6) est agencé en dessous du siège d'appoint (3) en position de repos et s'ajuste sur le contour de l'aile arrière (4).

2. Ensemble de siège selon la revendication 1, caractérisé en ce qu'il est prévu sur l'aile arrière (4) une structure élastique (9) pour l'étrier rabattu (6).

3. Ensemble de siège selon l'une quelconque des revendications précédentes, caractérisé en ce que l'étrier rabattu (6) présente un contact de compression avec la structure élastique (9).

4. Ensemble de siège selon l'une quelconque des revendications précédentes, caractérisé en ce que l'étrier (6) présente des zones rembourrées (8) et/ou des poignées (7).

5. Ensemble de siège selon l'une quelconque des revendications précédentes, caractérisé en ce que l'étrier (6) est fabriqué en matériau élastique.

6. Ensemble de siège selon l'une quelconque des revendications précédentes, caractérisé en ce que l'étrier (6) est fixé au siège d'appoint (3) ou à l'aile arrière (4) au moyen d'une attache (10) et en ce que sont intégrés à l'attache (10) un dispositif de blocage pour la position de sécurité et un dispositif de serrage pour la position de repos.
